# EUROPÄISCHE PATENTSCHRIFT

(11) **EP 1 309 037 B1**
(45) Veröffentlichungstag und Bekanntmachung des Hinweises auf die Patenterteilung: **07.06.2006**
(21) Anmeldenummer: 02023947.1
(22) Anmeldetag: 25.10.2002
(51) Int. Cl.: H01R 13/03, H01R 4/38

(54) **Einrichtung zum elektrisch leitenden Kontaktieren eines elektrisch leitenden Teiles eines länglichen Körpers, insbesondere eines Rohres oder Kabels**
Device for electrically contacting a conductive part of a long body such as tube or cable
Dispositif pour contacter électriquement une portion électroconductive d'un corps allongé, notamment d'un tube ou d'un câble

(30) Priorität: 01.11.2001 DE 20117689 U
(43) Veröffentlichungstag der Anmeldung: 07.05.2003
(73) Patentinhaber: Daume Patentbesitzgesellschaft mbH & Co. KG, 30938 Burgwedel (DE)
(72) Erfinder: Daume Britta, 30938 Burgwedel (DE)
(74) Vertreter: Wagner, Carsten

(56) Entgegenhaltungen:
- EP-A- 0 744 788
- EP-A- 0 982 524
- US-A- 4 594 221
- US-A- 5 236 789

## Beschreibung

Die Erfindung bezieht sich auf eine Kontaktierungseinrichtung der im Oberbegriff von Anspruch 1 genannten Art.

Derartige Kontaktierungseinrichtungen finden vielfach Anwendung z. B. als sogenannte Erdungsmuffen zum Erden von Kabeln oder Rohren. Sie weisen in der Regel einen Grundkörper auf, der vorzugsweise wenigstens teilweise aus einem elastischen Material gebildet ist und der sich an den zu kontaktierenden Körper anlegt. Wenigstens ein vorzugsweise metallisches Kontaktelement, das in Montagelage an einem elektrisch leitenden Teil des zu kontaktierenden Körpers anliegt, stellt die elektrisch leitende Verbindung zu dem zu kontaktierenden Körper dar. Das Kontaktelement befindet sich in Montageposition der Einrichtung zwischen dem zu kontaktierenden Körper und dem Grundkörper und ist an der dem zu kontaktierenden Körper zugewandten Seite des Grundkörpers gehalten.

EP 0 744 788 A1 offenbart eine gattungsgemäße Kontaktierungseinrichtung zum elektrisch leitenden Kontaktieren eines abisolierten Außenleiters eines Koaxialkabels. Der Grundkörper der Einrichtung weist ein bandförmiges, metallisches Trägerelement auf, das an seiner Außenfläche und an seinen axialen Rändern von einem elastischen Material ummantelt ist. An der in Montageposition dem zu kontaktierenden Körper zugewandten Seite ist dagegen keine Bedeckung durch elastisches Material vorgesehen. Der Grundkörper wird schellenartig um den Außenleiter des zu kontaktierenden Koaxialkabels gelegt, der ringartig von seiner elektrisch isolierenden Ummantelung befreit ist. Die aus elektrisch isolierendem Material bestehenden Seiten des Grundkörpers stützen sich dabei an den verbleibenden Rändern der Ummantelung ab, während der nicht beschichtete Teil des Trägerelementes in radialem Abstand zu dem blanken Rohrbereich zu liegen kommt. Dieser radiale Abstand wird überbrückt von einem Kontaktelement, das als Band aus einem Kupfergeflecht ausgeführt ist. Dieses Band liegt sowohl an dem blanken Rohr als auch an dem blanken Teil des Trägerelementes des Grundkörpers an und stellt so die elektrisch leitende Kontaktierung her.

Aus EP 0 982 524 A1 ist eine ähnliche Einrichtung bekannt, bei der jedoch auf ein separates Kontaktelement verzichtet wird. Vielmehr ist das metallische Trägerelement mit Kontaktvorsprüngen ausgestattet, die sich elastisch verformbar an den elektrisch leitenden Teil des zu kontaktierenden Körpers anlegen und damit als Kontaktelemente wirken. Als Kontaktvorsprünge werden insbesondere Profilierungen sowie z. B. zungenartige Ausstanzungen vorgeschlagen. Als Material für die Kontaktvorsprünge bzw. das Trägerelement aus dem die Kontaktvorsprünge ausgeformt sind, wird unter anderem niedrig legiertes Kupfer vorgeschlagen.

Aus der US 4,594,221 ist eine Kupferlegierung mit hoher Leitfähigkeit und hoher mechanischer Stabilität bekannt, die neben Kupfer 2 bis 4,8 Gew.-% Nickel, 0,2 bis 1,4 Gew.-% Silicium sowie 0,05 bis 0,45 Gew.-% Magnesium enthält. Diese Legierung eignet sich aufgrund ihrer vorteilhaften Eigenschaften beispielsweise für tecker.

Aus der US 5,236,789 ist die nach dem amerikanischen Unified-Numbering-System UNS als "C 70250" bezeichnete Legierung mit 96,2 Gew.-% Kupfer, 3,0 Gew.-% Nickel, 0,65 Gew.-% Silicium und 0,15 Gew.-% Magnesium bekannt, die ebenfalls als vorteilhafte Eigenschaften eine hohe mechanische Stabilität und elektrische Leitfähigkeit aufweist.

Die bekannten Kontaktierungseinrichtungen weisen den Nachteil auf, daß sie in Montageposition, in der der schellenartige Grundkörper um den zu kontaktierenden Körper gespannt ist, auf den zu kontaktierenden Körper einen verhältnismäßig starken und schwer zu kontrollierenden Druck ausüben. Dieses, bei der Kontaktierung von Rohren grundsätzlich uninteressante Kriterium, erhält eine wesentliche Bedeutung beim Kontaktieren von Kabeln, insbesondere von wellenleitenden Koaxialkabeln. Bei der Erdung solcher Kabel wird üblicherweise der äußere Leiter abisoliert und mit Hilfe einer Kontaktierungseinrichtung, z. B. einer sogenannten Erdungsmuffe, elektrisch leitend kontaktiert. Nach Entfernung der Isolationsschicht, die oft auch eine nicht unbedeutende Stützfunktion übernimmt, ist der Außenleiter verhältnismäßig empfindlich gegen Verformungen. Solche Verformungen, insbesondere Einschnürungen können sich durch zu großen radialen Druck ergeben. Bereits leichte Einschnürungen haben eine Erhöhung des Wellenwiderstandes im Kabel zur Folge, was unter ungünstigen Bedingungen zu Reflexionen und fehlerhafter Anpassung an nachfolgende Bauelemente führt. Im Ergebnis sinkt der wirkungsgrad der Wellenleitung.

Aufgabe der vorliegenden Erfindung ist es, eine gattungsgemäße Einrichtung so fortzubilden, daß der auf den zu kontaktierenden Körper ausgeübte Druck reduziert werden kann.

Diese Aufgabe wird gelöst durch die Lehre des Anspruchs 1. Den Merkmalen dessen kennzeichnenden Teils kommt im einzelnen folgende Bedeutung zu.

Durch die besondere Materialwahl, die auf eine Legierung abzielt, die mindestens zu 94,5 % aus Kupfer besteht und 2 bis 4 % Nickel, 0,5 bis 1 % Silicium sowie 0,05 bis 0,25 % Magnesium aufweist, wird es möglich, Kontaktelemente als Blechstrukturen herzustellen, die in ihrer Blechstärke dünner hergestellt werden können als entsprechende Profilbleche aus anderen Werkstoffen, ohne dabei die für ihre sonstigen Funktionen notwendigen, z. B. federnden und/oder tragenden Eigenschaften zu verlieren. Mit dünner ausgearbeiteten Profilblechen als Kontaktelemente lassen sich geringere Andruckstärken an den zu kontaktierenden Körper realisieren, ohne daß die beabsichtigte, elektrisch leitende Verbindung darunter leiden würde.

Ein weiterer Vorteil ergibt sich aus der deutlichen Materialeinsparung durch die dünnere Ausgestaltung des Profilbleches. Hierdurch können Herstellungskosten in einer Höhe eingespart werden, die die Mehrkosten, die sich aus dem derzeit noch höheren Preis des erfindungsgemäß verwendeten Materiales ergeben, überkompensiert.

Die Vorteile der Erfindung sind sowohl bei Kontaktierungseinrichtungen nutzbar, die ein separates Kontaktelement zwischen dem zu kontaktierenden Körper und dem Grundkörper aufweisen, wie auch bei solchen, bei denen das Trägerelement bereits mit als Kontaktelemente wirkenden Kontaktvorsprüngen ausgestattet ist. Insbesondere der Vorteil der Gewichtseinsparung äußert sich vor allem bei der letztgenannten Art von Kontaktierungseinrichtungen, da bei dieser ein besondere hoher Massenanteil der Gesamteinrichtung durch die erfindungsgemäße Legierung ersetzt werden kann.

Als besonders vorteilhaft hat es sich herausgestellt, die Legierung so zu wählen, daß sie mindestens zu 90,8 % aus Kupfer besteht und 2,7 bis 3,3 % Nickel, 0,6 bis 0,7 % Silicium und 0,1 bis 0,2 % Magnesium enthält. Bevorzugt einsetzbar ist dabei die im amerikanischen Unified-Numbering-System UNS als "C 70250" definierte Legierung mit im wesentlichen 96,2 % Kupfer, 3 % Nickel, 0,65 % Silicium und 0,15 % Magnesium. Derartiges Material besitzt Eigenschaften, die es für die Verwendung als Kontaktelement einer gattungsgemäßen Kontaktierungseinrichtung besonders geeignet machen, nämlich eine elektrische Leitfähigkeit von mehr als 20 MS/m, eine Wärmeleitfähigkeit von 180 bis 200 W/ (mK), einen Wärmeausdehnungskoeffizienten von 17 bis 18 10⁻⁶/K, eine Dichte von 8,7 bis 9,0 g/cm³ und ein Elastizitätsmodul von 120 bis 140 kN/mm². Zudem läßt sich das Material leicht bearbeiten und behält seine mechanisch günstigen, federnden Eigenschaften auch bei Ausformung als dünnes Blech, z. B. von weniger als 0,5 oder sogar unter 0,4 mm bei. Erfindungsgemäße Kontaktelemente sind daher in ihrer bevorzugten Ausführungsform in Blechstärken von etwa 0,4 mm ausgestaltet. Die spezielle Form der Kontaktelemente kann innerhalb weiter Grenzen und in Anpassung an die speziellen Bedingungen ausgeführt werden.

In einer bevorzugten Ausführungsform besteht der Grundkörper der erfindungsgemäßen Kontaktierungseinrichtung aus einem im wesentlichen bandförmigen, metallischen Trägerelement, das schellenartig um den zu kontaktierenden Körper spannbar ist. Es ist teilweise von einem elastischen Material so umschlossen, daß die in Montageposition der Einrichtung dem zu kontaktierenden Körper zugewandte Seite des Trägerelementes wenigstens teilweise frei bleibt von elastischem Material. Auf diese Weise kann das wenigstens eine Kontaktelement in Montagelage einen elektrisch leitenden Kontakt zwischen dem elektrisch leitenden Teil des zu kontaktierenden Körpers und dem Trägerelement herstellen. Das wenigstens eine Kontaktelement kann dabei beispielsweise als wenigstens ein Vorsprung des Trägerelementes ausgestaltet sein, wobei der oder die Kontaktvorsprünge vorzugsweise einstückig und besonders vorteilhafterweise materialeinheitlich mit dem Trägerelement verbunden ist bzw. sind. Der oder die Kontaktvorsprünge können dabei beispielsweise als runde, dreiecksförmige, rechteckige, trapezförmige oder ähnliche Profilierungen des Trägerelementes ausgestaltet sein oder als z. B. zungenartige Ausstanzungen. Die Zungen können dabei sowohl in Umfangsrichtung als auch in Axialrichtung des zu kontaktierenden Körpers ausgerichtet sein. Insbesondere die letztgenannte Variante läßt sich vorteilhaft durch die Bildung einer einzelnen, mäandrierenden Stanz- oder Schnittlinie in Umfangsrichtung des Trägerelementes realisieren. Dabei entstehen zwei einander gegenüberliegende und ineinander verzahnte Reihen von Zungen, die in einander entgegengesetzter Ausrichtung in Montageposition axial an dem zu kontaktierenden Körper anliegen. Auf diese Weise läßt sich in einem besonders einfachen Bearbeitungsschritt eine Vielzahl zuverlässiger Kontaktstellen schaffen.

Bei den vorgenannten Ausführungsformen ist die Materialeinheitlichkeit von Kontaktvorsprüngen und Trägerelementen besonders vorteilhaft. Wesentlich arbeitsaufwendiger, jedoch im Rahmen der Erfindung durchaus möglich, ist es, den oder die Kontaktvorsprünge stoffschlüssig mit dem Trägerelement zu verbinden. Hierbei können insbesondere für Trägerelement und Kontaktvorsprünge unterschiedliche Materialien gewählt werden.

In einer grundsätzlich anderen Ausführungsform ist das erfindungsgemäß als profiliertes Blech einer besonderen Legierung ausgeführte Kontaktelement als separates Bauteil gestaltet, das in Montagelage zwischen dem elektrisch leitenden Teil des zu kontaktierenden Körpers und dem bandförmigen Trägerelement des Grundkörpers liegt. Um eine sichere, elektrisch leitende Verbindung herzustellen, ist das Kontaktelement dabei vorzugsweise wellen-, mäander- oder zickzackförmig profiliert. In jedem Fall ist es erstrebenswert, das oder die Kontaktelemente so auszugestalten, daß sie in Montagelage elastisch federnd an dem zu kontaktierenden Körper anliegen.

Weitere Vorteile der Erfindung ergeben sich aus der speziellen Beschreibung bevorzugter Ausführungsformen und der beigefügten schematischen Zeichnung. Es zeigen:
- Fig. 1:: eine perspektivische Ansicht einer Kontaktierungseinrichtung;
- Fig. 2:: eine perspektivische Ansicht einer Kontaktierungseinrichtung in Montageposition;
- Fig. 3:: einen schematischen Radialschnitt durch eine Kontaktierungseinrichtung in Montageposition;
- Fig. 4:: in geschnitener Seitenansicht verschiedene Ausführungsformen von separaten Kontaktelementen;
- Fig. 5:: eine schematische Aufsicht auf die Innenseite einer Kontaktierungseinrichtung in einem ersten Ausführungsbeispiel;
- Fig. 6:: eine schematische Aufsicht auf ein Trägerelement einer Kontaktierungseinrichtung eines zweiten Ausführungsbeispiels;
- Fig. 7:: schematischer Axialschnitt durch eine Kontaktierungseinrichtung in einem zweiten Ausführungsbeispiel in Montageposition.

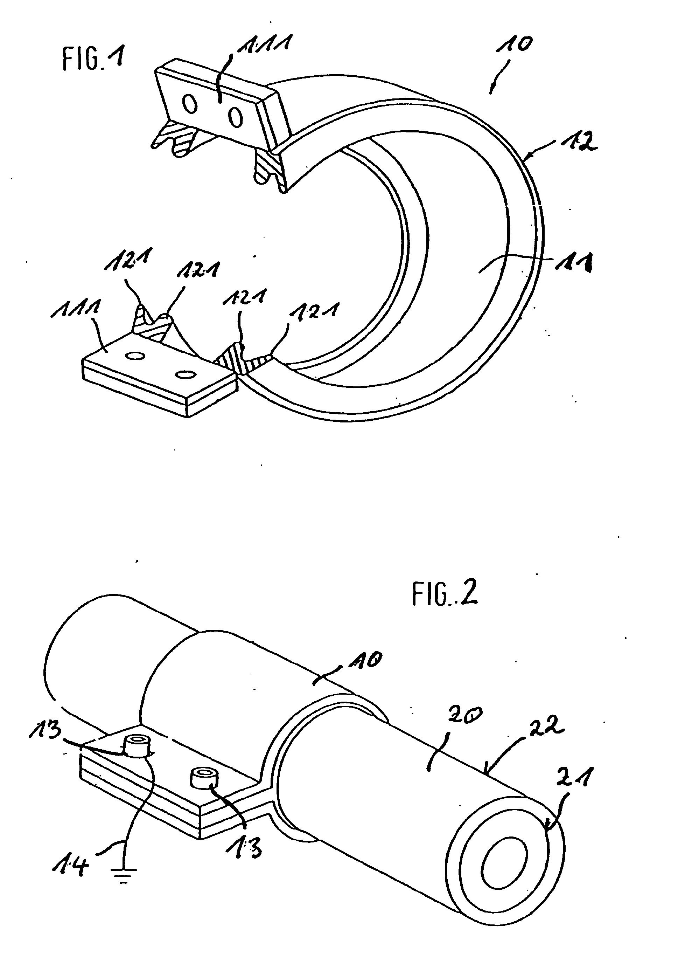

Fig. 1 stellt eine schematische Ansicht einer bevorzugten Grundform einer Kontaktierungseinrichtung 10 für Kabel oder Rohre dar. Ein bandförmig ausgestaltetes, metallisches Trägerelement 11 ist schellenförmig, wie in Fig. 2 gezeigt, um einen zu kontaktierenden Körper 20 spannbar. Hierzu weist es an seinen Schmalseiten angewinkelte Laschen 111 auf, die z. B. mittels Schrauben 13 miteinander verbindbar sind. Das Trägerelement 11 ist wenigstens an seiner in Montageposition außen liegenden Seite von einer elastischen Ummantelung 12 umgeben. Diese Ummantelung weist zusätzlich Dichtlippen 121 auf, die sich in Umfangsrichtung des zu kontaktierenden Körpers erstrecken und axial voneinander beabstandet sind. Die in Montageposition dem zu kontaktierenden Körper 20 zugewandte Fläche 112 des Trägerelementes 11 wird nicht von der Ummantelung 12 bedeckt.

In Fig. 2 ist schematisch die Montageposition eines solchen Kontaktierungseinrichtung 10 um einen zu kontaktierenden Körper, nämlich im vorliegenden Ausführungsbeispiel um ein Koaxialkabel 20, gezeigt. Im Bereich der Kontaktierungseinrichtung 10 ist, wie in Fig. 7 erkennbar, die äußere Ummantelung 22 des Koaxialkabels 20 entfernt, so daß die elektrisch leitenden Fläche 21 des Außenleiters des Koaxialkabels der blanken Fläche 112 des Trägerelementes 11 beabstandet gegenüber liegt.

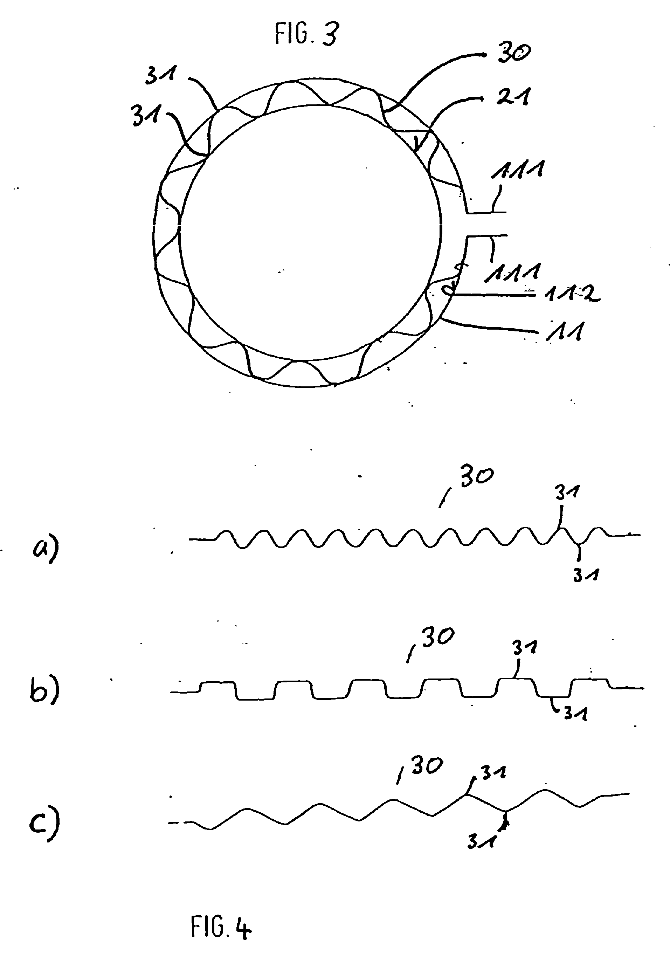

Dieser Abstand kann, wie in Fig. 3 gezeigt, von einem Kontaktelement 30 überbrückt werden. Fig. 3 stellt einen Radialschnitt durch ein Kontaktelement in Montageposition dar. Bei dem in Fig. 3 gezeigten Ausführungsbeispiel handelt es sich um ein separates Kontaktelement 30, das im Bereich der Kontaktierungseinrichtung 10 zwischen der zu kontaktierenden Fläche 21 des Koaxialkables 20 und der blanken Fläche 112 des Trägerelementes 11 liegt. In der schematischen Darstellung von Fig. 3 ist die Ummantelung 12 aus elastischem Material des Grundkörpers nicht dargestellt.

Erfindungsgemäß besteht das Kontaktelement 30 aus einem Blech einer Legierung, die mindestens zu 94,5% aus Kupfer (Cu) besteht und 2-4% Nickel (Ni), 0,5-1% Silicium (Si) sowie 0,05-0,25% Magnesium (Mg) aufweist. Bei dem Ausführungsbeispiel liegen die Legierungsbestandteile im wesentlichen zu folgenden Anteilen vor: 96,2% Cu, 3% Ni, 0,65% Si und 0,15% Mg.

Das Kontaktelement 30 kann auf verschiedenste Weise ausgestaltet sein. Drei besonders bevorzugte Ausführungsbeispiele sind in Fig. 4 dargestellt. Dabei handelt es sich bei dem Kontaktelement 30 um ein wellenförmig (a), mäanderförmig (b) oder zickzackförmig (c) profiliertes Blech aus der oben angegebenen erfindungsgemäßen Legierung. Die Profilierung ist dabei vorzugsweise so ausgestaltet, daß eine Anlage des Kontaktelementes 30 zwischen dem Trägerelement 11 und dem Außenleiter 21 elastisch federnd zustande kommt. Auf diese Weise können ohne Schwierigkeiten Unregelmäßigkeiten in der abisolierten Ummantelung 22 des Koaxialkabels 20 ausgeglichen werden. Wie in Fig. 3 deutlich erkennbar, wird der elektrisch leitende Kontakt über mehrere, durch die Vorsprünge 31 gebildete Kontaktstellen erzeugt. Es ist offensichtlich, daß hierdurch eine radiale Druckkraft auf den Außenleiter 21 wirkt. Diese Kraft muß so bemessen sein, daß zwar eine zuverlässige, elektrisch leitende Kontaktierung zustande kommt, daß jedoch trotz der fehlenden Stabilisierung durch die abisolierte Ummantelung 22 keine Einschnürung des Außenleiters 21 entsteht, die zu Störungen der Wellenleitung führen würde.

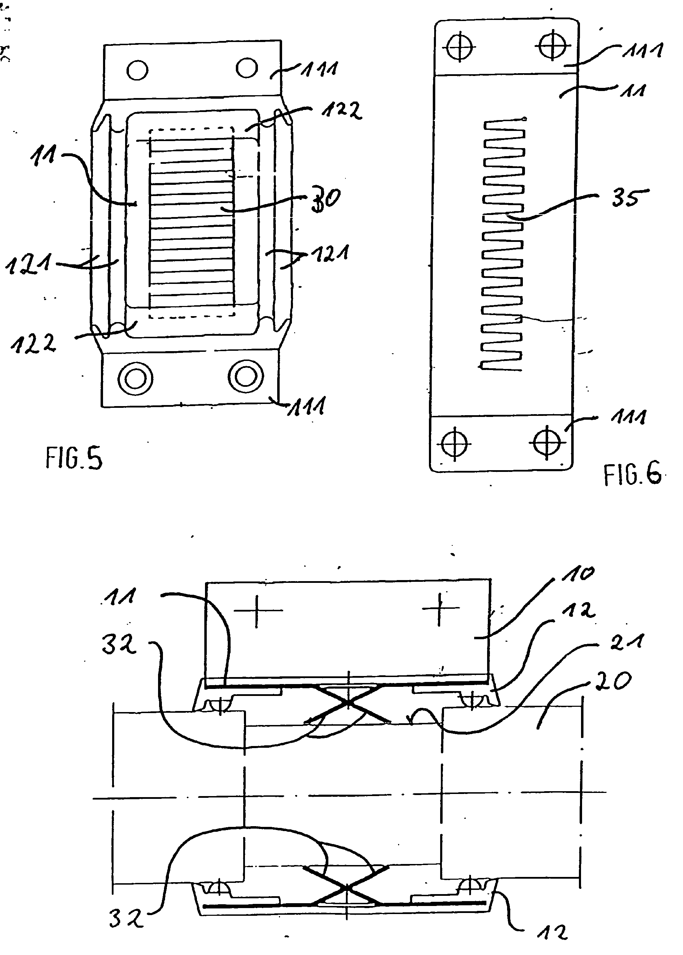

Fig. 5 zeigt die Aufsicht auf die Innenseite einer Kontaktierungseinrichtung mit separatem Kontaktelement 30 gemäß den Fig. 3 und 4 in einer besonders vorteilhaften Weiterbildung. Das Kontaktelement 30 ist nämlich hier an der in Montagelage dem zu kontaktierenden Körper 20 zugewandten Seite des Grundkörpers mit Haltemitteln gehalten. Die Haltemittel bestehen in Taschen 121, die auf der Innenseite des Trägerelementes 11 von der elastischen Ummantelung 12 gebildet werden. Die Enden des separaten Kontaktelementes 30 können in diese Taschen 122 eingesteckt werden, was insbesondere die Montage der Kontaktierungseinrichtung erheblich vereinfacht. Der Bereich der Innenseite 112 des Kontaktelementes 11 zwischen den Taschen 121 ist von der Ummantelung nicht bedeckt, so daß die elektrisch leitende Verbindung zwischen dem Trägerelement und dem zu kontaktierenden Außenleiter 21 des Koaxialkabels 20 zustande kommen kann.

Fig. 6 zeigt eine grundsätzlich andere Ausführungsform der erfindungsgemäßen Kontaktierungseinrichtung 10. Dabei wird auf ein separates Kontaktelement verzichtet und statt dessen das Trägerelement 11 selbst mit Kontaktvorsprüngen 32 versehen. In der in Fig. 6 gezeigten, besonders vorteilhaften Ausführungsform bestehen die Kontaktvorsprünge 32, in einander gegenüberliegenden, sich in axialer Richtung des zu kontaktierenden Körpers 20 erstreckenden Zungen 32. Deren Wirkungsweise ist in Fig. 7 verdeutlicht. Die Zungen 32 lassen sich besonders einfach herstellen, indem in das Trägerelement 11 eine durchgehende, mäandrierende Stanz- oder Schnittlinie 35, wie in Fig. 6 dargestellt, gestanzt wird. Die entstehenden, ineinander verzahnten Zungen können durch leichtes Aufbiegen mit der zu kontaktierenden Fläche 121 in elastisch federenden und elektrisch leitenden Kontakt gebracht werden.

Weitere Ausführungsbeispiele, etwa als runde, dreieckförmige, rechteckige oder ähnliche Profilierungen des Trägerelementes 11 ausgebildete Kontaktvorsprünge, sind in der Zeichnung im einzelnen nicht dargestellt.

## Patentansprüche

1. Einrichtung (10) zum elektrisch leitenden Kontak-Lieren eines abisolierten Außenleiters (21) eines Koaxialkabels (20),
mit einem Grundkörper (11) zur Anlage an dem zu kontaktierenden Koaxialkabel (20) und
mit wenigstens einem in Montageposition zwischen dem Grundkörper (11) und dem zu kontaktierenden Koaxialkabel (20) befindlichen separaten Kontaktelement (30, 32) zur Herstellung einer elektrisch leitenden Verbindung mit dem Außenleiter (21) des zu kontaktierenden Koaxialkabels (20),
**dadurch gekennzeichnet, daß**
das wenigstens ein Kontaktelement (30, 32) aus einem dünneren Profilblech einer Legierung besteht, die mindestens zu 94,5% aus Kupfer (Cu) besteht und 2 bis 4 % Nickel (Ni), 0,5 bis 1 % Silicium (Si) sowie 0,05 bis 0,25 % Magnesium (Mg) aufweist.

2. Einrichtung (10) nach Anspruch 1, **dadurch gekennzeichnet, daß** die Legierungsbestandteile in dem wenigstens einen Kontaktelement (30, 32) in den folgenden Anteilen vorliegen:
| | | |
|---|---|---|
| Ni | - | 2,7 bis 3,3 %, |
| Si | - | 0,6 bis 0,7 %, |
| Mg | - | 0,1 bis 0,2 %, |
| Cu ≥ 95,8 %. | | |

3. Einrichtung (10) nach Anspruch 1, **dadurch gekennzeichnet, daß** die Legierungsbestandteile in dem wenigstens einen Kontaktelement (30, 32) im wesentlichen zu folgenden Anteilen vorliegen:
| | | |
|---|---|---|
| Ni | - | 3 %, |
| Si | - | 0,65 %, |
| Mg | - | 0,15 %, |
| Cu | - | 96,2 %. |

4. Einrichtung (10) nach Anspruch 1, **dadurch gekennzeichnet, daß** als Material des wenigstens einen Kontaktelementes (30, 32) die im Unified-Numbering-System UNS als "C 70250" definierte Legierung Anwendung findet.

## Claims

1. Device (10) for the electrically conductive contacting of a stripped outer conductor (21) of a coaxial cable (20) comprising a base (11) for positioning on the coaxial cable (20) to be contacted, and comprising at least one separate contact element (30, 3 2) located in the assembly position between the base (11) and the coaxial cable (20) to be contacted, for producing an electrically conductive connection with the outer conductor (21) of the coaxial cable (20) to be contacted, **characterised in that** at least one contact element (30, 32) consists of a relatively thin profile sheet metal of an alloy which consists of at least 94.5 % copper (Cu), and from 2 to 4 % nickel (Ni), from 0.5 to 1 % silicon (Si) and from 0.05 to 0.25 % magnesium (Mg).

2. Device (10) according to claim 1, **characterised in that** the alloy constituents in the at least one contact element (30, 32) are present in the following proportions:
| | | |
|---|---|---|
| Ni | - | 2.7 to 3.3 % |
| Si | - | 0.6 to 0.7 % |
| Mg | - | 0.1 to 0.2 % |
| Cu ≥ 95.8 % | | |

3. Device (10) according to claim 1, **characterised in that** the alloy constituents in the at least contact element (30, 32) are substantially present in the following proportions:
| | | |
|---|---|---|
| Ni | - | 3 % |
| Si | - | 0.65 % |
| Mg | - | 0.15 % |
| Cu | - | 96.2 % |

4. Device (10) according to claim 1, **characterised in that** the alloy defined in the unified numbering system UNS as "C 70250" is used as the material of the at least one contact element (30, 32).

## Revendications

1. Dispositif (10) pour contacter électriquement un conducteur extérieur (21) dénudé d'un câble coaxial (20),
avec un corps de base (11) pour l'appui sur le câble coaxial (20) à contacter et
avec au moins un élément de contact (30, 32) séparé et se trouvant dans la position de montage entre le corps de base (11) et le câble coaxial (20) à contacter pour l'établissement d'une liaison électroconduetrice avec le conducteur extérieur (21) du câble coaxial (20) à contacter,
**caractérisé en ce que**
le au moins un élément de contact (30, 32) est constitué d'une tôle profilée mince d'un alliage qui est composé d'au moins 94,5 % de cuivre (Cu) et présente 2 à 4 % de nickel (Ni), 0,5 à 1 % de silicium (Si) et 0,05 à 0,25 % de magnésium (Mg).

2. Dispositif (10) selon la revendication 1, **caractérisé en ce que** les constituants de l'alliage dans le au moins un élément de contact (30, 32) sont présents dans les proportions suivantes :
Ni - 2,7 à 3,3 %,
Si - 0,6 à 0,7 %,
Mg - 0,1 à 0,2 %,
Cu ≥ 95,8 %.

3. Dispositif (10) selon la revendication 1, **caractérisé en ce que** les constituants de l'alliage dans le au moins un élément de contact (30, 32) sont présents pour l'essentiel dans les proportions suivantes:
Ni - 3 %,
Si - 0,65 %,
Mg-0,15 %,
Cu-96,2%.

4. Dispositif (10) selon la revendication 1, **caractérisé en ce que** l'alliage défini dans le Unified-Numbering-System UNS par "C 70250" est utilisé comme matériau du au moins un élément de contact (30,32).
